# FASCICULE DE BREVET EUROPEEN

(11) **EP 2 769 461 B1**
(45) Date de publication et mention de la délivrance du brevet: **24.06.2015**
(21) Numéro de dépôt: 12758863.0
(22) Date de dépôt: 14.09.2012
(51) Int. Cl.: H02M 5/458, H02M 1/36

(54) **CONVERTISSEUR DE PUISSANCE ET SON CIRCUIT DE PRE-CHARGE**
STROMWANDLER UND VORLADESCHALTUNG DAFÜR
POWER CONVERTER AND PRE-CHARGING CIRCUIT OF SAME

(30) Priorité: 17.10.2011 FR 1159351
(43) Date de publication de la demande: 27.08.2014
(73) Titulaire: Schneider Toshiba Inverter Europe SAS, 27120 Pacy sur Eure (FR)
(72) Inventeur: GUYOMARD, Jocelyn, F-27180 Saint Sébastien du Morsent (FR); VANG, Heu, F-92506 Rueil Malmaison cedex (FR)
(74) Mandataire: Bié, Nicolas
(86) Numéro de dépôt international: PCT/EP2012/068071
(87) Numéro de publication internationale: WO 2013/056918

(56) Documents cités:
- US-A- 5 459 652
- US-A- 5 574 632

## Description

La présente invention se rapporte à convertisseur de puissance et à son circuit de précharge.

De manière connue, un convertisseur de puissance comporte principalement :
- un bus continu d'alimentation connecté à une source de tension continue et comportant une ligne d'alimentation positive et une ligne d'alimentation négative,
- un condensateur de bus connecté à la ligne d'alimentation positive et à la ligne d'alimentation négative,
- un module onduleur connecté au bus continu d'alimentation et doté de plusieurs bras de commutation, commandés pour fournir une tension variable à une charge électrique,
- un circuit de pré-charge du condensateur de bus comportant une résistance de limitation, appelée également résistance de pré-charge, connectée à la ligne d'alimentation et au condensateur de bus, et un relais de pré-charge connecté en parallèle de la résistance de limitation, ledit relais de pré-charge étant commandé à la fermeture lorsque la charge du condensateur de bus est terminée.

Un convertisseur de puissance peut également comporter un module redresseur connecté d'une part à une source d'alimentation électrique fournissant une tension alternative et d'autre part au bus continu d'alimentation.

Pour commander un convertisseur de puissance, il est connu d'employer un système d'alimentation à découpage intégré au convertisseur de puissance. Ce système d'alimentation à découpage emploie un ensemble de démarrage.

Un convertisseur de puissance est également connu du document US5459652.

Le but de l'invention est de proposer un convertisseur de puissance dans lequel l'ensemble de démarrage du système d'alimentation à découpage et le circuit de pré-charge du condensateur de bus concourent à diminuer les pertes du convertisseur.

Ce but est atteint par un convertisseur de puissance destiné à commander une charge électrique comportant :
- un bus continu d'alimentation doté d'une ligne d'alimentation positive et d'une ligne d'alimentation négative,
- un condensateur de bus,
- une résistance de limitation connectée à la ligne d'alimentation positive et au condensateur de bus, ledit condensateur de bus étant connecté à la ligne d'alimentation négative,
- un système d'alimentation à découpage,
- un ensemble de démarrage du système d'alimentation à découpage
   connecté à la ligne d'alimentation négative du bus continu d'alimentation, le convertisseur comportant :
   - des moyens de sélection agencés pour connecter la ligne d'alimentation positive, soit, dans un premier état, à l'ensemble de démarrage du système d'alimentation à découpage, soit, dans un deuxième état, au condensateur de bus pour court-circuiter la résistance de limitation,
   - une unité de commande étant agencée pour commander les moyens de sélection dans le premier état ou dans le deuxième état.

Selon une particularité, l'ensemble de démarrage du système d'alimentation à découpage comporte une résistance de démarrage et un condensateur connectés en série, et une diode zéner connectée en parallèle dudit condensateur.

Selon une autre particularité, le convertisseur comporte une résistance de décharge connectée en parallèle de l'ensemble de démarrage du système d'alimentation à découpage.

D'autres caractéristiques et avantages vont apparaître dans la description détaillée qui suit en se référant à un mode de réalisation donné à titre d'exemple et représenté sur les dessins annexés définis ci-dessous :
- la figure 1 représente le convertisseur de puissance de l'invention,
- la figure 2 représente le convertisseur de puissance de l'invention selon une variante de réalisation.

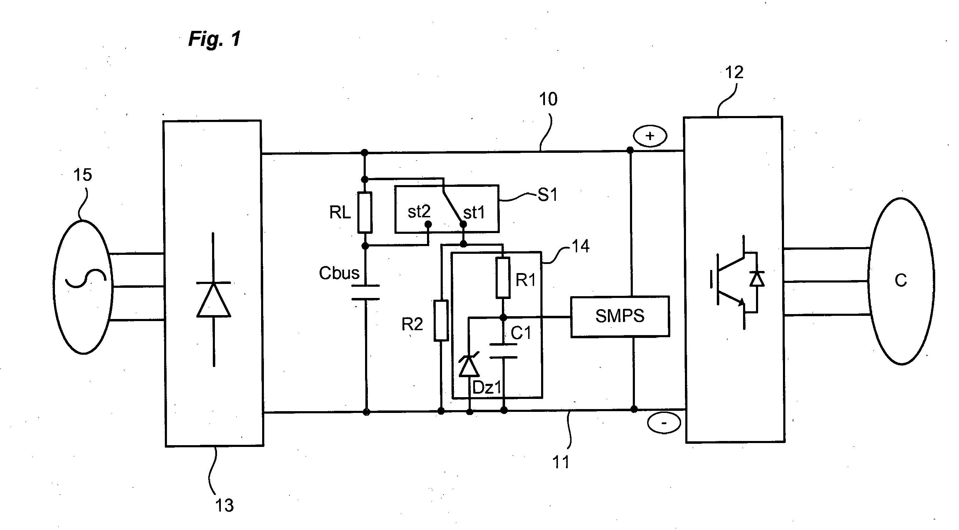

En référence à la figure 1, un convertisseur de puissance comporte principalement :
- Un bus continu d'alimentation connecté à une source de tension continue et comportant une ligne d'alimentation positive 10 et une ligne d'alimentation négative 11.
- Un condensateur de bus Cbus connecté à la ligne d'alimentation positive 10 et à la ligne d'alimentation négative 11 et destiné à maintenir la tension du bus à une valeur constante. Certains convertisseurs peuvent comporter plusieurs condensateurs de bus connectés en série.
- Un module onduleur 12 comportant plusieurs bras de commutation, chaque bras de commutation comportant au moins deux transistors, le module onduleur étant destiné à fournir une tension variable à une charge électrique C connectée au convertisseur de puissance.

Un convertisseur de puissance peut également comporter un module redresseur 13 de tension connecté d'une part à une source 15 d'alimentation électrique fournissant une tension alternative et d'autre part au bus continu d'alimentation pour fournir audit bus une tension continue. Avec le module redresseur 13, le convertisseur de puissance réalise la fonction de variateur de vitesse.

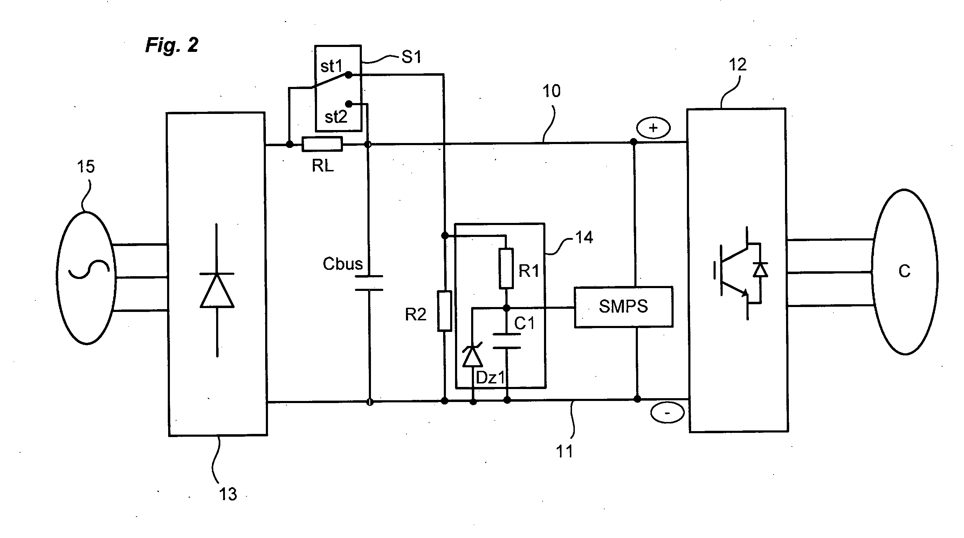

Un convertisseur de puissance comporte également un circuit de pré-charge du condensateur de bus Cbus. Ce circuit de pré-charge est employé pour limiter le courant de charge fourni au condensateur de bus Cbus lors du démarrage du variateur de vitesse. Ce circuit de pré-charge se compose d'une résistance de limitation RL, appelée également résistance de pré-charge, et d'un relais, appelé relais de pré-charge, connecté en parallèle de la résistance de limitation RL et destiné à court-circuiter la résistance de limitation RL une fois que la charge du condensateur de bus Cbus est terminée. Le circuit de pré-charge, composé de la résistance de limitation RL et du relais de pré-charge, est habituellement connecté d'une part à la ligne positive du bus continu d'alimentation et d'autre part au condensateur de bus. La résistance de limitation RL et le relais de pré-charge étant positionnés dans le circuit de pré-charge du condensateur de bus Cbus, ceux-ci peuvent être connectés directement en série avec le condensateur de bus Cbus (comme sur la figure 1) ou positionnés en série sur la ligne d'alimentation positive 10 du bus continu d'alimentation (comme sur la figure 2).

Par ailleurs, le convertisseur de puissance comporte également un système d'alimentation à découpage (SMPS pour "Switch Mode Power Supply"). Le système d'alimentation à découpage SMPS est alimenté par la tension fournie par le bus continu d'alimentation et est employé pour alimenter les circuits auxiliaires et la partie contrôle et commande des transistors. Tant que le bus continu d'alimentation n'a pas atteint une tension suffisante, le module onduleur ne peut être commandé.

Pour le démarrage du système d'alimentation à découpage, il est connu d'employer un ensemble 14 de démarrage comportant une résistance de démarrage R1, un condensateur C1 connecté en série et une diode zéner Dz1 connectée en parallèle du condensateur C1 pour limiter la tension de celui-ci. Cet ensemble est destiné à être connecté à la ligne d'alimentation positive 10 du bus et à la ligne d'alimentation négative 11 du bus. Il permet d'alimenter le circuit de contrôle du système d'alimentation à découpage et d'appliquer une tension aux bornes du système d'alimentation à découpage SMPS pour que celui-ci puisse démarrer. Une fois que le système d'alimentation à découpage a fini de démarrer, l'ensemble 14 de démarrage est déconnecté du bus et le système d'alimentation à découpage SMPS est alimenté normalement par le bus via deux lignes de connexion connectées aux deux lignes d'alimentation 10, 11 du bus.

Le but de l'invention est de mutualiser la fonction de court-circuitage de la résistance de limitation RL du circuit de pré-charge et la déconnexion de l'ensemble 14 de démarrage. En effet, le circuit de pré-charge et l'ensemble de démarrage deviennent inutiles en même temps, c'est-à-dire lorsque la charge du condensateur de bus Cbus est terminée. L'invention consiste donc à utiliser un seul relais S1 pour réaliser les deux fonctions. Ce relais S1 est commandé entre deux états par une unité de commande 16, un premier état st1 dans lequel le courant de charge du condensateur de bus Cbus traverse la résistance de limitation RL et la résistance de démarrage R1 de l'ensemble 14 de démarrage, et un deuxième état st2 dans lequel la résistance de limitation RL est court-circuitée et l'ensemble 14 de démarrage déconnecté de la ligne d'alimentation positive 10 du bus continu d'alimentation. Pour remplir les deux fonctions décrites ci-dessus, le relais S1 employé sera par exemple de type SPDT ("Single Pole Double Throw", comme représenté sur la figure 1). Le relais S1 est connecté à la ligne d'alimentation positive 10 du bus continu d'alimentation et comporte deux pôles, chacun des pôles définissant l'un de ses états st1, st2. Selon l'invention, le convertisseur de puissance peut également comporter une résistance de décharge R2 connectée en parallèle de l'ensemble 14 de démarrage. Cette résistance de décharge R2 permet de décharger rapidement le condensateur de bus Cbus lors de l'extinction du convertisseur de puissance et d'éviter les pertes supplémentaires lorsque cette résistance R2 est branchée en permanence aux bornes du condensateur de bus Cbus. Cette résistance de décharge R2 se trouve connectée au bus lorsque le relais S1 est dans son premier état st1.

## Revendications

1. Convertisseur de puissance destiné à commander une charge électrique (C) comportant :
- un bus continu d'alimentation doté d'une ligne d'alimentation positive (10) et d'une ligne d'alimentation négative (11),
- un condensateur de bus (Cbus),
- une résistance de limitation (RL) connectée à la ligne d'alimentation positive (10) et au condensateur de bus (Cbus), ledit condensateur de bus étant connecté à la ligne d'alimentation négative (11),
- un système d'alimentation à découpage (SMPS) connecté à la ligne d'alimentation positive (10) et à la ligne d'alimentation négative (11),
- un ensemble (14) de démarrage du système d'alimentation à découpage connecté à la ligne d'alimentation négative (11) du bus continu d'alimentation,
**caractérisé en ce que** le convertisseur comporte :
- des moyens de sélection agencés pour connecter la ligne d'alimentation positive (10), soit, dans un premier état (st1), à l'ensemble (14) de démarrage du système d'alimentation à découpage, soit, dans un deuxième état (st2), au condensateur de bus (Cbus) pour court-circuiter la résistance de limitation,
- une unité de commande (16) agencée pour commander les moyens de sélection dans le premier état (st1) ou dans le deuxième état (st2).

2. Convertisseur de puissance selon la revendication 1, **caractérisé en ce que** l'ensemble (14) de démarrage du système d'alimentation à découpage (SMPS) comporte une résistance de démarrage (R1) et un condensateur (C1) connectés en série, et une diode zéner (Dz1) connectée en parallèle dudit condensateur (C1).

3. Convertisseur de puissance selon la revendication 1 ou 2, **caractérisé en ce qu'**il comporte une résistance de décharge (R2) connectée en parallèle de l'ensemble (14) de démarrage du système d'alimentation à découpage.

## Patentansprüche

1. Leistungsumrichter, der dazu bestimmt ist, eine elektrische Last (C) zu steuern, der aufweist:
- einen Gleichstrom-Versorgungsbus, der mit einer positiven Versorgungsleitung (10) und mit einer negativen Versorgungsleitung (11) versehen ist,
- einen Buskondensator (Cbus),
- einen Begrenzungswiderstand (RL), der mit der positiven Versorgungsleitung (10) und mit dem Buskondensator (Cbus) verbunden ist, wobei der Buskondensator mit der negativen Versorgungsleitung (11) verbunden ist,
- ein Schaltnetzteilsystem (SMPS), das mit der positiven Versorgungsleitung (10) und mit der negativen Versorgungsleitung (11) verbunden ist,
- eine Anlasseinheit (14) des Schaltnetzteilsystems, die mit der negativen Versorgungsleitung (11) des Versorgungs-Gleichstrombusses verbunden ist, **dadurch gekennzeichnet, dass** der Umrichter aufweist:
- Auswahleinrichtungen, die eingerichtet sind, um die positive Versorgungsleitung (10) entweder in einem ersten Zustand (st1) mit der Anlasseinheit (14) des Schaltnetzteilsystems oder in einem zweiten Zustand (st2) mit dem Buskondensator (Cbus) zu verbinden, um den Begrenzungswiderstand kurzzuschließen,
- eine Steuereinheit (16), die eingerichtet ist, um die Auswahleinrichtungen in den ersten Zustand (st1) oder in den zweiten Zustand (st2) zu steuern.

2. Leistungsumrichter nach Anspruch 1, **dadurch gekennzeichnet, dass** die Anlasseinheit (14) des Schaltnetzteilsystems (SMPS) einen Anlasswiderstand (R1) und einen Kondensator (C1) in Reihe geschaltet und eine mit dem Kondensator (C1) parallelgeschaltete Zener-Diode (Dz1) aufweist.

3. Leistungsumrichter nach Anspruch 1 oder 2, **dadurch gekennzeichnet, dass** er einen Entladewiderstand (R2) aufweist, der mit der Anlasseinheit (14) des Schaltnetzteilsystems parallelgeschaltet ist.

## Claims

1. A power converter intended to control an electrical load (C) including:
- a DC power bus equipped with a positive power line (10) and a negative power line (11),
- a bus capacitor (Cbus),
- a limiting resistor (RL) connected to the positive power line (10) and to the bus capacitor (Cbus), said bus capacitor being connected to the negative power line (11),
- a switch mode power supply (SMPS) connected to the positive power line (10) and to the negative power line (11),
- a start-up assembly (14) of the switch mode power supply
connected to the negative power line (11) of the DC power bus, **characterized in that** the converter includes:
- selection means arranged to connect the positive power line (10), either, in a first state (st1), to the start-up assembly (14) of the switch mode power supply, or, in a second state (st2), to the bus capacitor (Cbus) to short-circuit the limiting resistor,
- a control unit (16) arranged to control the selection means in the first state (st1) or in the second state (st2).

2. The power converter as claimed in claim 1, **characterized in that** the start-up assembly (14) of the switch mode power supply (SMPS) includes a start-up resistor (R1) and a capacitor (C1) connected in series, and a Zener diode (Dz1) connected in parallel with said capacitor (C1).

3. The power converter as claimed in claim 1 or 2, **characterized in that** it includes a discharge resistor (R2) connected in parallel with the start-up assembly (14) of the switch mode power supply.
